# EUROPÄISCHE PATENTANMELDUNG

(11) **EP 1 464 370 A1**
(43) Veröffentlichungstag der Anmeldung: **06.10.2004**
(21) Anmeldenummer: 03405181.3
(22) Anmeldetag: 17.03.2003
(51) Int. Cl.: B01D 3/00, B01D 53/18

(54) **Feinverteiler für eine Flüssigkeit**

(71) Anmelder: Sulzer Chemtech AG, 8404 Winterthur (CH)
(72) Erfinder: Kehrer, Florian, 8307 Effretikon (CH)
(74) Vertreter: Sulzer Management AG

(57) **Zusammenfassung**

Der Feinverteiler für eine Flüssigkeit (20) umfasst eine primäre Verteilstufe, die eine Mehrzahl von Austrittsöffnungen (32) aufweist, und eine sekundäre, unterhalb der primären Verteilstufe angeordnete Verteilstufe mit Verteilrinnen (5). Flächenartige Leitmitteln (4) führen von der primären zur sekundären Verteilstufe. Jedem Leitmittel ist eine Austrittsöffnung oder eine gruppe von Austrittsöffnungen sowie eine Verteilrinne zugeordnet. Jedes Leitmittel, mit welchem Flüssigkeit (23) aus der mindestens einen zugeordneten Austrittsöffnung zur sekundären Verteilstufe zuleitbar ist, erstreckt sich von der primären Verteilstufe zur zugeordneten Verteilrinne sowie durch sie hindurch und bildet unterhalb der Verteilrinne eine Abtropfkante (45) für die zugeleitete Flüssigkeit. Jedes Leitmittel weist zumindest teilweise eine dreidimensionale Strukturierung sowie eine regelmässige Perforierung auf. Jede Verteilrinne ist als Stauraum ausgebildet, in dem eine Verteilung der Flüssigkeit unter Verwendung eines Drosselmittels (25) und aufgrund eines hydrodynamischen Ausgleichs erfolgt.

## Beschreibung

Die Erfindung betrifft einen Feinverteiler für eine Flüssigkeit sowie eine Kolonne mit einem solchen Feinverteiler. Mit dem Feinverteiler lassen sich geringe Mengen an Flüssigkeit gleichmässig auf eine Packung der Kolonne verteilen.

Es ist eine Vielzahl von Flüssigkeitsverteilern bekannt, die eine gleichmässige Berieselung einer Packung mit kleinen Flüssigkeitsmengen ermöglichen. Aus der EP-A- 0 512 277 ist ein solcher Verteiler bekannt, bei dem die Flüssigkeit unten an Verteilrinnen in Töpfe und aus diesen gleichmässig zu fingerartigen Leitelementen weiter geleitet wird. Es wird die Flüssigkeit aus Öffnungen der Töpfe über Drahtstücke den Leitelementen zugeführt und auf diesen zu Abtropfspitzen weitergeleitet. Die Leitelemente sind an jedem Topf radial so gegen aussen gebogen, dass alle Abtropfspitzen des Flüssigkeitsverteilers in einer gleichmässigen Verteilung über der Packung angeordnet sind.

Aufgabe der Erfindung ist es, einen weiteren Feinverteiler für Flüssigkeiten zu schaffen, der unter Verwendung einfacherer Mitteln eine gleichmässige Verteilung kleinster Flüssigkeitsmengen ermöglicht. Diese Aufgabe wird durch den im Anspruch 1 definierten Feinverteiler gelöst.

Der Feinverteiler für eine Flüssigkeit umfasst eine primäre Verteilstufe, die eine Mehrzahl von Austrittsöffnungen aufweist, und eine sekundäre, unterhalb der primären Verteilstufe angeordnete Verteilstufe mit Verteilrinnen. Flächenartige Leitmitteln führen von der primären zur sekundären Verteilstufe. Jedem Leitmittel ist eine Austrittsöffnung oder eine Gruppe von Austrittsöffnungen sowie eine Verteilrinne zugeordnet. Jedes Leitmittel, mit welchem Flüssigkeit aus der mindestens einen zugeordneten Austrittsöffnung zur sekundären Verteilstufe zuleitbar ist, erstreckt sich von der primären Verteilstufe zur zugeordneten Verteilrinne sowie durch sie hindurch und bildet unterhalb der Verteilrinne eine Abtropfkante für die zugeleitete Flüssigkeit. Jedes Leitmittel weist zumindest teilweise eine dreidimensionale Strukturierung sowie eine regelmässige Perforierung auf. Jede Verteilrinne ist als Stauraum ausgebildet, in dem eine Verteilung der Flüssigkeit unter Verwendung eines Drosselmittels und aufgrund eines hydrodynamischen Ausgleichs erfolgt.

Die abhängigen Ansprüche 2 bis 8 betreffen vorteilhafte Ausführungsformen des erfindungsgemässen Feinverteilers. Eine Kolonne mit dem erfindungsgemässen Feinverteiler ist Gegenstand der Ansprüche 9 und 10.

Nachfolgend wird die Erfindung anhand der Zeichnungen erläutert. Es zeigen:
- Fig. 1: eine schematisch dargestellte Draufsicht auf einen Flüssigkeitsverteiler, der über einer strukturierten Packung in einer Kolonne angeordnet ist,
- Fig. 2: ein Feinverteiler-Element eines erfindungsgemässen Feinverteilers, der in der Kolonne einsetzbar ist,
- Fig. 3: einen Querschnitt durch eine zweite Ausführungsform des erfindungsgemässen Feinverteiler-Elements und
- Fig. 4, 5: zwei weitere Ausführungsformen des erfindungsgemässen Flüssigkeitsverteilers.

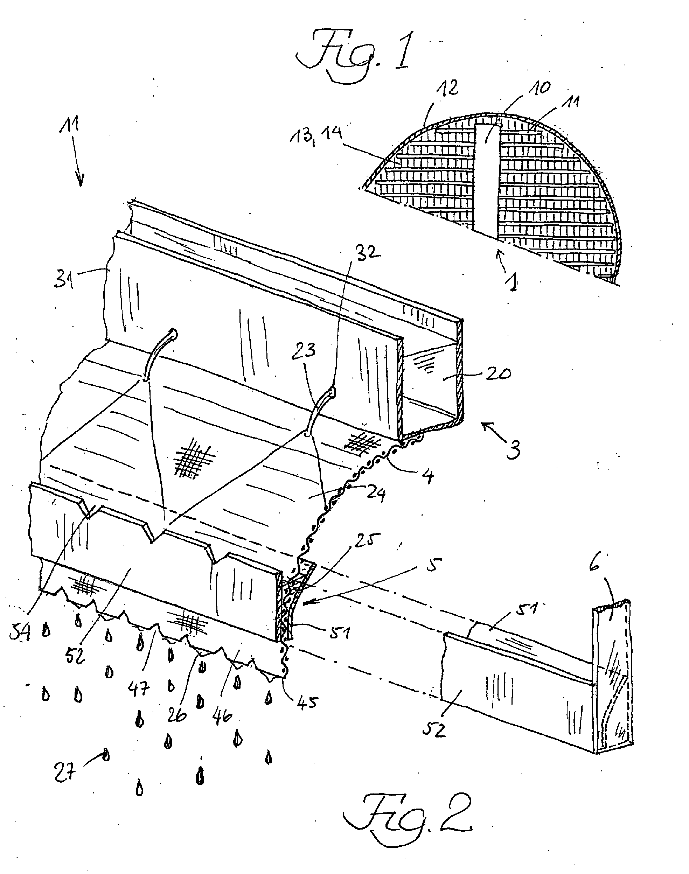

In Fig. 1 ist - schematisch dargestellt - ein teilweise gezeigter Querschnitt durch eine Kolonne 12 und ein Flüssigkeitsverteiler 1 in Draufsicht zu sehen. Dieser Flüssigkeitsverteiler 1 ist ein Feinverteiler, mit dem eine Feinverteilung einer Flüssigkeit durchführbar ist. Der Feinverteiler 1 ist über einer strukturierten Packung 13 angeordnet, deren Struktur durch vertikale Lagen 14 gebildet ist. Er umfasst eine Vielzahl von Feinverteiler-Elementen 11, die unter einem Hauptkanal 10 angeordnet und quer (senkrecht oder unter einem Winkel ungleich 90°) zu den Lagen 14 ausgerichtet sind. Oben angeordnete Teile der Feinverteiler-Elemente 11 bilden eine primäre Verteilstufe, unten angeordnete Teile eine sekundäre Verteilstufe.

Details zum Feinverteiler-Element 11 sind in Fig. 2 dargestellt. Das Feinverteiler-Elemente 11 umfasst einen Kanal 3, der Teil der primären Verteilstufe ist. Der Kanal 3 weist in einer vertikalen Wand 31, die auch geneigt sein könnte, Austrittsöffnungen 32 auf. Die Wandstärke der Wand 31 ist typischerweise kleiner als der Durchmesser der kleinsten Austrittsöffnung 32. Es wird eine Flüssigkeit 20 verteilt. Oberhalb einer tief angeordneten Austrittsöffnung 32 kann eine zusätzliche Austrittsöffnung (nicht dargestellt) oder auch mehrere Öffnungen vorgesehen sein. Statt eines gegen oben offenen Kanals lässt sich auch ein Rohr verwenden, in dem seitliche Austrittsöffnungen auf dem Niveau einer Rohrachse oder in der Nähe dieses Niveaus angeordnet sind.

Auf einem tiefer liegenden Niveau unter dem Kanal 3 ist eine Verteilrinne 5 angeordnet, die Teil der sekundären Verteilstufe ist. Sie ist dem Kanal 3 zugeordnet und zumindest angenähert parallel zu diesem ausgerichtet. Ein flächenartiges Leitmittel 4 zum Leiten von Flüssigkeit 20, die in Form von Strahlen 23 aus dem Kanal 3 austritt, erstreckt sich vom Kanal 3 zu der zugeordneten Verteilrinne 5 und durch diese hindurch zu einer Abtropfkante 45. Das Leitmittel 4 weist eine dreidimensionale Strukturierung sowie eine regelmässige Perforierung auf: Es besteht beispielsweise aus einem Metallgewebe oder einem feinmaschigen Streckgitter, auf dem die auftreffenden Flüssigkeitsstrahlen 23 durch eine transversale Ausbreitung 24 vorverteilt wird.

Die Verteilrinne 5 umfasst zwei Blechflanken 51, 52, die einen nach unten sich verjüngenden, in einen Spalt übergehenden Bereich bilden. Das flächenartige und strukturierte Leitmittel 4 steht im Spalt entlang der ganzen Verteilrinne 5 mit den inneren Oberflächen der beiden Blechflanken 51, 52 in gleichmässigem Kontakt und wirkt so als ein Drosselmittel 25, das auf die Strömung der abfliessenden Flüssigkeit 20 einen Widerstand ausübt. Blechstreifen 6 an den zwei Enden der Verteilrinne 5, von denen nur einer dargestellt ist, hindern die Flüssigkeit 20 an einem seitlichen Austreten. Mit den beiden Blechstreifen 6 kann die Verteilrinne 5 am Kanal 3 befestigt werden. Das Leitmittel 4 hat - anders als dargestellt - eine Breite, die bis zu den beiden Blechstreifen 6 reicht. Auf diese Weise ist die Verteilrinne 5 als ein Stauraum ausgebildet, in dem eine weitere Verteilung der Flüssigkeit durch einen hydrodynamischen Ausgleich erfolgen kann.

Die Abtropfkante 45 wird mit Vorteil in schmale Segmente 46 unterteilt, die durch zwickelförmige Ausschnitte 47 von einander getrennt sind. Bei einer idealen Ausführung des Feinverteiler-Elements 11 mit einer horizontalen Ausrichtung sammelt sich an den unteren Kanten aller Segmente 46 Flüssigkeit 26 an, die sich in Form von Tropfen 27 entlang der gesamten Abtropfkante 45 von dieser löst. Es können auch kerbartige Ausnehmungen 54 an der oberen Kante der Blechflanke 52 vorgesehen werden. Staut sich in der Verteilrinne 5 zu viel Flüssigkeit an, so wirken solche Ausnehmungen als Überlaufstellen, durch die eine weitgehend gleichmässige Verteilung der überschüssigen Flüssigkeit ermöglicht wird.

Die Wirkung des dem hydrodynamischen Ausgleich dienenden Drosselmittels 25 hängt von der Viskosität der Flüssigkeit 20 und der Strukturierung des Leitmittels 4 ab. Die Strukturierung des Leitmittels 4 wird der Viskosität der zu verteilenden Flüssigkeit entsprechend ausgebildet. Für die Verteilung einer Flüssigkeit 20 mit niederer Viskosität weist das Leitmittel 4 mit Vorteil eine einheitliche und feine Strukturierung auf. Für die Verteilung einer viskosen Flüssigkeit 20, die eine hohe Viskosität hat, kann eine grobe Strukturierung, beispielsweise eine Rillierung, einer feinen Strukturierung überlagert werden. Durch die grobe Strukturierung ergeben sich relativ breite Lücken zwischen dem Leitmittel 4 und den Blechflanken 51 sowie 52. Die viskose Flüssigkeit 20 fliesst hauptsächlich durch diese Lücken ab.

Das Leitmittel 4 ist vorzugsweise ein Metallgewebe, insbesondere ein sogenanntes "Fünfschaft-Gewebe" oder auch ein einfaches Quadratmaschengewebe. Das Fünfschaft-Gewebe ist ein fünfbindiges Atlasgewebe, das zwei stark unterschiedlich strukturierte Oberflächen hat. Die eine Oberfläche eignet sich besonders gut für die Ausbildung eines Rieselfilms. Daher wird das Fünfschaft-Gewebe bevorzugt zur Herstellung von strukturierten Packungen verwendet. Auch für die Verwendung im erfindungsgemässen Feinverteilers 1 ist dieses Gewebe vorteilhaft.

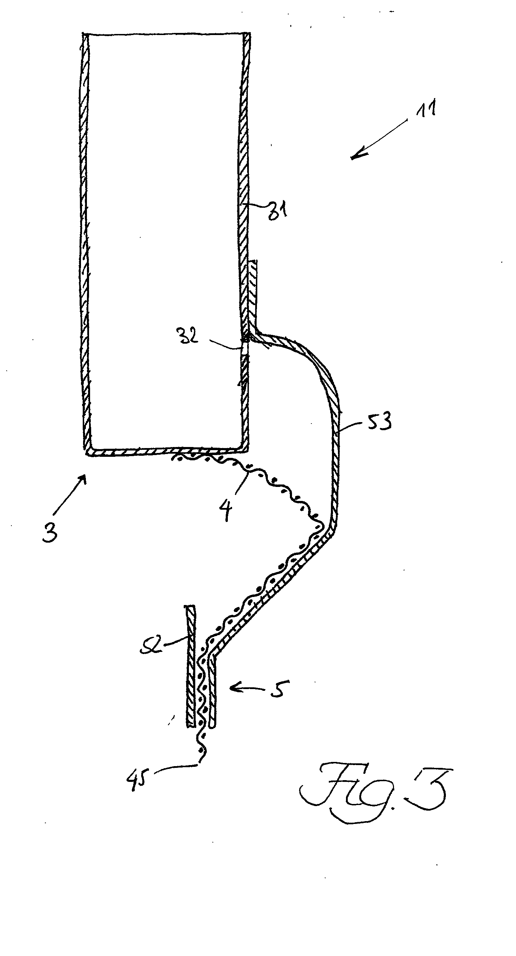

Fig. 3 zeigt einen Querschnitt durch eine zweite Ausführungsform des erfindungsgemässen Feinverteiler-Elements 11. Hier tritt ein zweites flächenartiges Leitmittel 53 auf, das den Kanal 3 mit der Verteilrinne 5 verbindet. Auch dieses zweite Leitmittel 53 hat die Funktion, die zu verteilende Flüssigkeit 20, die aus Öffnungen 32 als nicht dargestellte Strahlen austritt, nach unten zum ersten Leitmittel 4 zu lenken. Dieses erste Leitmittel 4 schirmt den freien Raum zwischen dem Kanal 3 und dem zweiten Leitmittel 53 gegen unten ab. Weiter unten leitet es gemeinsam mit dem Leitmittel 53 die Flüssigkeit in die Verteilrinne 5, die weitgehend gleich wie in Fig. 2 gezeigt ausgebildet ist.

Das zweite Leitmittel 53 ist ein geformtes Blech, das eine mechanisch stabile Verbindung zwischen dem Kanal 3 und der Verteilrinne 5 herstellt. Es bildet insbesondere die eine Flanke der Verteilrinne 5. Die zweite Flanke 52 kann durch Punktschweissung mit dem ersten Leitmittel 4 und dem zweiten Leitmittel 53 verbunden werden. Durch die Dicke des ersten Leitmittels 4 ergibt sich die Breite des Spalts der Verteilrinne 5.

Der Maximalabstand zwischen benachbarten Austrittsöffnungen 32 des gleichen Kanals beträgt 1 m, vorzugsweise nicht mehr als 50 cm. Die Durchmesser der Austrittsöffnung 32 sind so gross gewählt, dass pro Stunde zwischen 1 und 30 Liter der zu verteilenden Flüssigkeit 20 durch jede Austrittsöffnung 32 abgebbar ist.

Die Packung 13 weist vertikale Lagen 14 auf und die Verteilrinnen 5 des Verteilers 1 sind quer (senkrecht oder unter einem Winkel ungleich 90°) zu diesen Lagen 14 angeordnet. Die Lagen 14 sind beispielsweise aus Folien hergestellt, die jeweils eine dreidimensionale Strukturierung sowie eine regelmässige Perforierung aufweisen. Das erste Leitmittel 4 des Feinverteilers 1 ist mit Vorteil auch aus dieser Folie oder einer ähnlichen hergestellt.

Bei einer Ausführungsform, die in Fig. 4 dargestellt ist, umfasst der Flüssigkeitsverteiler 1 einen Hauptkanal 10 und Nebenkanäle 3 (primäre Verteilstufe), die auf demselben Niveau angeordnet sind. Die Feinverteiler-Elemente 11 sind im wesentlichen gleich wie jene der Fig. 3 ausgebildet. Mit der Verteilrinne 5 wird vorteilhafterweise die Zone unterhalb des Hauptkanals 10 überbrückt.

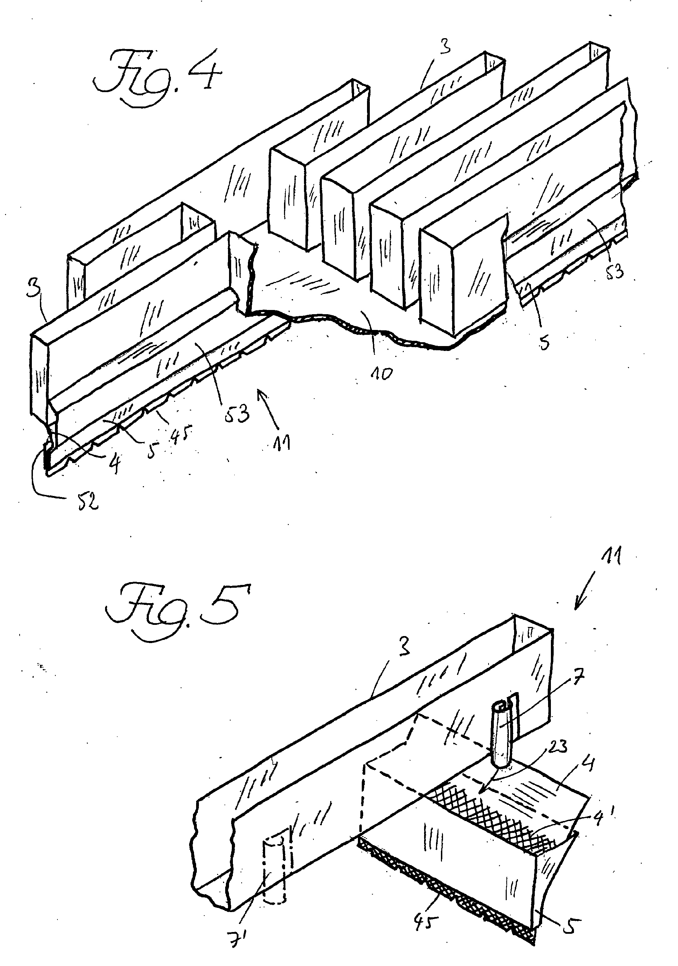

Bei der Ausführungsform der Fig. 5 wird die Flüssigkeit 23 innerhalb eines rohrartigen Leitorgans 7 aus dem Nebenkanal 3 der sekundären Verteilstufe des Feinverteiler-Elements 11 zugeführt. Hier ist die Verteilrinne 5 der sekundären Verteilstufe quer zum Nebenkanal 3 orientiert. Das Leitorgan 7 lenkt - wie in einer Veröffentlichung, der EP-A- 1 153 640, beschrieben - die Flüssigkeit 23 auf einer schraubenförmigen Bahn auf das Leitmittel 4. Dieses weist in einem unteren Bereich 4' eine dreidimensionale Strukturierung sowie regelmässige Perforierung auf. Der untere Bereich 4' kann aus einem metallischen Gewebe bestehen, das auf einer glatten Blechfolie aufliegt. Die Flüssigkeit 23 fliesst zuerst auf der Blechfolie in Richtung Falllinie und wird anschliessend durch das Gewebe und die Verteilrinne 5 transversal, d. h. quer zur Falllinie verteilt. Es ist jeweils nur ein Leitorgan 7 einer Verteilrinne 5 zugeordnet. Ein zweites Leitorgan 7' des dargestellten Nebenkanals 3 ist strichpunktiert angedeutet. Auch diesem Leitorgan 7' ist eine Verteilrinne 5 zugeordnet (nicht dargestellt). Mit dem Feinverteiler-Element 11 wird der aus der EP-A- 1 153 640 bekannte Flüssigkeitsverteiler zu einem Feinverteiler weiterentwickelt. Dank den Feinverteiler-Elementen 11 kann zwischen benachbarten Nebenkanälen 3 ein grösserer Abstand als beim bekannten Verteiler gewählt werden. Die Verteilrinne 5 hat mit Vorteil eine Länge von 40 bis 60 cm.

## Patentansprüche

1. Feinverteiler (1) für eine Flüssigkeit (20),
mit einer primären Verteilstufe, die eine Mehrzahl von Austrittsöffnungen (32) aufweist,
mit einer sekundären Verteilstufe, die unterhalb der primären Verteilstufe angeordnet ist und Verteilrinnen (5) umfasst,
mit flächenartigen Leitmitteln (4), die von der primären zur sekundären Verteilstufe führen, wobei
jedem Leitmittel eine Austrittsöffnung oder eine Gruppe von Austrittsöffnungen sowie eine Verteilrinne zugeordnet ist,
jedes Leitmittel, mit welchem Flüssigkeit (23) aus der mindestens einen zugeordneten Austrittsöffnung zur sekundären Verteilstufe zuleitbar ist, sich von der primären Verteilstufe zur zugeordneten Verteilrinne sowie durch sie hindurch erstreckt und unterhalb der Verteilrinne eine Abtropfkante (45) für die zugeleitete Flüssigkeit bildet,
jedes Leitmittel zumindest teilweise eine dreidimensionale Strukturierung sowie eine regelmässige Perforierung aufweist und
jede Verteilrinne als Stauraum ausgebildet ist, in dem eine Verteilung der Flüssigkeit unter Verwendung eines Drosselmittels (25) und aufgrund eines hydrodynamischen Ausgleichs erfolgt.

2. Feinverteiler nach Anspruch 1, **dadurch gekennzeichnet, dass** die Verteilrinne (5) durch zwei Blechflanken (51, 52) gebildet ist, dass ein zwischen den Blechflanken nach unten sich verjüngender Bereich in einen Spalt übergeht, der zusammen mit dem Leitmittel (4) das Drosselmittel (25) bildet, dessen Wirkung von der Viskosität der Flüssigkeit (20) und der Strukturierung des Leitmittels abhängt, und dass die Abtropfkante (45) und/oder die obere Kante der einen Blechflanke (52) vorzugsweise zwickelförmige Ausschnitte (47) oder kerbartige Ausnehmungen in regelmässigen Abständen aufweisen.

3. Feinverteiler nach Anspruch 2, **dadurch gekennzeichnet, dass** die Strukturierung des Leitmittels (4) der Viskosität der zu verteilenden Flüssigkeit (20) entsprechend ausgebildet ist, dass für die Verteilung einer Flüssigkeit mit niederer Viskosität das Leitmittel mit einer feinen Strukturierung einheitlich strukturiert ist und für die Verteilung einer Flüssigkeit mit hoher Viskosität eine grobe Strukturierung, beispielsweise eine Rillierung, einer feinen Strukturierung überlagert ist.

4. Feinverteiler nach einem der Ansprüche 1 bis 3, **dadurch gekennzeichnet, dass** das Leitmittel (4) ein Metallgewebe ist, insbesondere ein sogenanntes "Fünfschaft-Gewebe" oder ein einfaches Quadratmaschengewebe.

5. Feinverteiler nach einem der Ansprüche 1 bis 4, **dadurch gekennzeichnet, dass** die primäre Verteilstufe eine Mehrzahl von Kanälen (3) umfasst und die Austrittsöffnungen (32) in seitlichen Wänden (31) der Kanäle angeordnet sind, dass die Verteilrinnen (5) der sekundären Verteilstufe jeweils einem der Kanäle zugeordnet und zumindest angenähert parallel zum entsprechenden Kanal ausgerichtet sind und dass die flächenartigen Leitmittel (4) sich jeweils von einem der Kanäle zu der zugeordneten Verteilrinne und durch sie hindurch erstreckt, wobei die Kanäle gegen oben offen oder als Rohre ausgebildet sein können.

6. Feinverteiler nach Anspruch 5, **dadurch gekennzeichnet, dass** das genannte flächenartige Leitmittel (4) ein erstes Leitmittel ist, dass ein zweites flächenartiges Leitmittel (53) den Kanal mit der Verteilrinne verbindet und dieses zweite Leitmittel die Funktion hat, die zu verteilende Flüssigkeit (20) nach unten zum ersten Leitmittel zu lenken, und dass insbesondere das zweite Leitmittel (53) ein geformtes Blech ist, das eine mechanisch stabile Verbindung zwischen dem Kanal (3) und der Verteilrinne (5) herstellt und dabei die eine Flanke der Verteilrinne bilden kann.

7. Feinverteiler nach Anspruch 5 oder 6, **dadurch gekennzeichnet, dass** für jeden Kanal (3) der Maximalabstand zwischen benachbarten Austrittsöffnungen (32) ein Meter, vorzugsweise nicht mehr als 50 cm, beträgt und dass durch jede Austrittsöffnung pro Stunde eine Menge an zu verteilender Flüssigkeit (20) abgebbar ist, deren Wert zwischen einem und dreissig Liter liegt.

8. Feinverteiler nach einem der Ansprüche 1 bis 4, **dadurch gekennzeichnet, dass** die primäre Verteilstufe eine Mehrzahl von Kanälen (3) umfasst, dass rohrartige Leitorgane, die seitlich an den Kanälen angeordnet sind, die Flüssigkeit vertikal nach unten zu den Austrittsöffnungen (32) leiten, und dass die Verteilrinne (5) der sekundären Verteilstufe quer zu den Kanälen der primären Verteilstufe ausgerichtet sein können.

9. Kolonne mit einer geordneten Packung (13) und mit einem Feinverteiler (1) für Flüssigkeiten (20) gemäss einem der Ansprüche 1 bis 8, **dadurch gekennzeichnet, dass** die Packung vertikale Lagen (14) aufweist und die Verteilrinnen (5) des Verteilers quer - d. h. senkrecht oder unter einem Winkel ungleich 90° - zu diesen Lagen angeordnet sind.

10. Kolonne nach Anspruch 9, **dadurch gekennzeichnet, dass** die Lagen (14) der Packung (13) aus Folien hergestellt sind, die jeweils eine dreidimensionale Strukturierung sowie eine regelmässige Perforierung aufweisen, und dass das erste Leitmittel (4) des Feinverteilers (1) aus der gleichen Folie oder einer ähnlichen hergestellt ist.
